# EUROPÄISCHE PATENTANMELDUNG

(11) **EP 2 402 110 A1**
(43) Veröffentlichungstag der Anmeldung: **04.01.2012**
(21) Anmeldenummer: 11005347.7
(22) Anmeldetag: 30.06.2011
(51) Int. Cl.: B23K 11/30, B23B 5/16

(54) **Vorrichtung zur Formgebung und/oder zum mechanischen Entfernen von Ablagerungen sowie eine Schweißelektrode für das Aluminiumschweißen**

(30) Priorität: 01.07.2010 DE 102010025835
(71) Anmelder: Wedo Automotive GmbH, 59174 Kamen (DE)
(72) Erfinder: Koch, Walter, 26817 Rhauderfehn-Holte (DE)
(74) Vertreter: Meinke, Dabringhaus und Partner GbR

(57) **Zusammenfassung**

Die Erfindung betrifft eine Vorrichtung zur Formgebung und/oder zum mechanischen Entfernen von Ablagerungen an Schweißelektroden (1) beim Aluminiumschweißen, aufweisend mindestens ein Schneidelement (8) mit einer Hauptschneide (7), wobei der Hauptschneide (7) mindestens eine Spanfläche (12) und mindestens eine Freifläche (13) zugeordnet sind und die Hauptschneide (7) des Schneidelements (1) jeweils im Bereich der Kante von aneinander angrenzender Spanfläche (12) und Freifläche (13) gebildet ist, und Schneidelement (8) und Schweißelektrode (1) eine Relativdrehung zueinander ausführen. Hierbei weist die Hauptschneide (7) im Bereich der Kante zwischen Spanfläche (12) und Freifläche (13) beidseits eines Mittenbereichs (10) eine kreisringförmig um den Mittenbereich (10) ausgerichtete Profilierung (9) auf, die zur rotatorischen spanenden Bearbeitung von kreisringförmigen Vertiefungen (2) in der im Wesentlichen ebenen Kontaktfläche (15) der Schweißelektrode (1) dienen, wohingegen vorzugsweise im Mittenbereich (10) des Schneidelementes (1) ein gerader Konturabschnitt (10) der Hauptschneide (7) gebildet ist, der In der Schweißelektrode (1) eine im Wesentlichen ebene, vertieft liegende Fläche (14) ausbildet.

## Beschreibung

Die Erfindung betrifft eine Vorrichtung zur Formgebung und/oder zum mechanischen Entfernen von Ablagerungen für das Aluminiumschweißen gemäß Oberbegriff des Anspruches 1 sowie eine Schweißelektrode gemäß Oberbegriff des Anspruches 14.

Widerstandsschweißungen werden in einer Vielzahl von Anwendungen im Bereich der Fertigungstechnik eingesetzt und dienen üblicherweise dazu, dünnwandige Metallteile oder dergleichen wie etwa Blechteile miteinander zu verbinden. Hierfür werden von Hand oder etwa auch von mechanisierten oder automatisierten Einrichtungen wie beispielsweise Schweißrobotern entsprechende Schweißzangen an die Verbindungsstellen der Werkstücke heran gebracht und dort so miteinander auf Kontakt gefahren, dass die Werkstücke mindestens punktförmig aufeinander Ilegen. Durch den über die Schweißzangen auf die Werkstücke aufgebrachten Schweißstrom wird das Material des Werkstückes punktuell sehr stark erhitzt und verschweißt bleibend miteinander.

Durch das Schweißverfahren kommt es unweigerlich dazu, dass die Schweißzangen im Bereich der Berührung mit den Werkstücken im Laufe der Zeit eine Veränderung erfahren, und zwar eine Veränderung sowohl der Form als auch der Materialeigenschaften. Üblicherweise werden für derartige Schweißzangen im Bereich der Berührung mit dem Werkstück Materialien aus Kupfer und Kupferlegierungen benutzt, die beim Schweißen einem sogenannten Abbrand, also einer Abtragung von Material der Schweißzangen im Bereich der Berührung mit dem Werkstück unterliegen. Ebenfalls werden die Oberflächen der Schweißzangen im Bereich der Berührung mit dem Werkstück sich dadurch verändern, dass Material aus den Werkstücken oder durch die Verschweißung entstehender Rückstände, wie etwa Schlacken oder dergleichen, sich dort anlagern und auch dadurch die Geometrie der entsprechenden Oberflächen der Schweißzangen verändern. Derartige Ablagerungen, die beim Schweißen entstehen und sich an der Schweißelektrode vornehmlich im Berührungsbereich ablagern, müssen aber periodisch entfernt werden. Denn für die Erzielung qualitativ hochwertiger Schweißpunkte ist es wichtig, dass die Schweißelektroden besonders in ihrem Kontaktbereich, der mit dem zu schweißenden Werkstück in Berührung kommt, plan oder definiert geformt sind.

Im Bereich etwa der Automobiltechnik oder sonstiger Fertigungsbereiche, in denen eine hohe Zahl von Schweißungen in kurzer Zeit durchgeführt werden muss, ist es von zentraler Bedeutung, dass die Schweißzangen in ihrem Kontaktbereich möglichst immer identische Berührung mit den Werkstücken haben und dadurch gleichbleibende Schweißungen ausführen können. Durch die Veränderungen der Schweißzangen in ihrem Kontaktbereich, wie vorstehend beschrieben, wird aber unweigerlich eine Veränderung der Schweißungen einhergehen, die möglichst zu vermelden Ist. Daher ist es schon seit langem bekannt, anstelle von massiven Schweißzangen aus dem vorstehend genannten Material Schweißzangen zu verwenden, bei denen im Bereich der Berührung mit den Werkstücken sogenannte Kappen aufgesetzt sind, die aus dem genannten Material bestehen und relativ leicht nach Erreichen einer nicht mehr zulässigen Länge bzw. Wandungsdicke ausgetauscht werden können, um die Reproduzierbarkeit, Zuverlässigkeit und Festigkeit der Schweißpunkte zu gewährleisten.

Derartige Kappen sind häufig näpfchenartige Hohlteile, die über einen entsprechenden Konus auf den Träger der Schweißzangen aufgesetzt werden und somit fest mit der Schweißzange, gleichzeitig aber lösbar verbunden sind. Das Wechseln der Kappen ist ein relativ aufwendiger Vorgang, der darüber hinaus mit einer beträchtlichen Stillstandszeit der Schweißanlage einhergeht und daher nur dann vorgenommen werden soll, wenn die Kappe nicht mehr innerhalb des zulässigen Toleranzbereichs liegt. Zur Vermeidung dieser übermäßigen Stillstandszeiten ist es bekannt, die Kappen statt sie auszuwechseln einer formgebenden Bearbeitung zu unterziehen, bei der die den Werkstücken nahen Bereiche der Kappe ähnlich wie bei einem Anspitzer eines Bleistiftes spanend nachbearbeitet werden und daher nach dieser Bearbeitung wieder die Toleranzen hinsichtlich der Form und der Oberfläche einhalten. Dieses Nachbearbeiten der Kappen erfolgt üblicherweise mit spanenden Werkzeugen, die durch eine Relativbewegung zwischen der Kappe und dem Werkzeug genau wie beim Anspitzer eines Bleistiftes die Oberfläche der Kappe definiert abtragen und dabei Verunreinigungen beseitigen sowie die Ausgangsgeometrie der Kappe in dem Bereich der Schweißpunkte wieder herstellen. Hierzu ist eine Vielzahl von Werkzeugen bekannt, die durch entsprechende Formgebung oder Zusammenwirken mehrerer entsprechender Werkzeuge die Geometrie der Schweißkappe wieder einstellen. Üblicherweise werden Werkzeuge eingesetzt, die als Schneidplatten mit oder ohne Radiusschneide ausgeführt sind.

Gegenüber dem Schweißen von Stahlmaterialien ergeben sich bei dem in der Automobiltechnik zunehmend benutzten Schweißen von Aluminiummaterialien unterschiedliche Anforderungen an das Nachbearbeiten der Schweißelektroden. Das Schweißen von Aluminiummaterialien lässt sich nur dann mit wirtschaftlichen Standzeiten der Schweißelektroden realisieren, wenn die Berührungsflächen der Elektroden für die Berührung der zu verschweißenden Aluminiummaterialien eine Profilierung aufweisen. So ist beispielsweise in der EP 0 088 231 B1 eine Profilierung der grundsätzlich ebenen oder leicht balligen Berührungsfläche der Elektroden beschrieben, bei der in die ursprünglich ebene Berührungsfläche nutenartige Profilierungen mit relativ geringer Tiefe eingebracht werden, die eine wesentliche Verbesserung der Standzeit der Schweißelektroden beim Verschweißen der Aluminiummaterialien ergeben. Die Profilierung wird über entsprechende Drehwerkzeuge auf einer Drehmaschine spiralförmig in die ebene Berührungsfläche eingebracht. Es wird ebenfalls angegeben, dass die Profilierung als konzentrische kreisförmige Nuten ausgebildet werden, die ggf. auch mittels eines Vielfachwerkzeugs eingebracht werden können. Eine konkrete Ausgestaltung einer derartigen zerspanenden Vorrichtung wird nicht aufgezeigt.

Es ist daher Aufgabe der vorliegenden Erfindung, eine zerspanende Vorrichtung der gattungsgemäßen Art derart weiter zu entwickeln, dass die Wiederherstellung der Geometrie und der Oberfläche der Schweißkappen für das Aluminiumschweißen sicher und wirtschaftlich gewährleistet ist.

Die Lösung der erfindungsgemäßen Aufgabe ergibt sich aus den kennzeichnenden Merkmalen des Anspruches 1 in Zusammenwirken mit den Merkmalen des Oberbegriffes. Weitere vorteilhafte Ausgestaltungen der Erfindung ergeben sich aus den Unteransprüchen.

Die Erfindung geht von einer Vorrichtung zur Formgebung und/oder zum mechanischen Entfernen von Ablagerungen an Schweißelektroden beim Aluminiumschweißen aus, aufweisend mindestens ein Schneidelement mit einer Hauptschneide, wobei der Hauptschneide mindestens eine Spanfläche und mindestens eine Freifläche zugeordnet sind und die Hauptschneide des Schneidelements jeweils im Bereich der Kante von aneinander angrenzender Spanfläche und Freifläche gebildet ist, und Schneidelement und Schweißelektrode eine Relativdrehung zueinander ausführen. Eine derartige gattungsgemäße Vorrichtung wird dadurch weiter entwickelt, dass die Hauptschneide im Bereich der Kante zwischen Spanfläche und Freifläche beidseits eines Mittenbereichs eine kreisringförmig um den Mittenbereich ausgerichtete Profilierung aufweist, die zur rotatorischen spanenden Bearbeitung von kreisringförmigen Vertiefungen in der im Wesentlichen ebenen Kontaktfläche der Schweißelektrode dienen, wohingegen im Mittenbereich des Schneidelementes ein gerader Konturabschnitt der Hauptschneide gebildet ist, der in der Schweißelektrode eine im Wesentlichen ebene, vertieft angeordnete Fläche ausbildet. Die Ausbildung der aus dem Stand der Technik grundsätzlich bekannten, im Wesentlichen ebenen, aber kreisringförmig profilierten Andruckfläche von Schweißelektroden zum Aluminiumschweißen mit einem Mehrfachwerkzeug bzw. mit einem Werkzeug, das gleichzeitig alle Profilierungen in der im Wesentlichen ebenen Andruckfläche herstellt, kann nur dann funktionieren, wenn die gegengleichen Profilierungen der Hauptschneide des entsprechenden Schneidelementes entsprechend ausgeformt sind. Hierzu müssen direkt im Bereich der Hauptschneide entsprechende Profilformen des Kantenbereichs zwischen Spanfläche und Freifläche ausgebildet sein, die in das Material der Schweißelektrode im Bereich der dort einzubringenden oder wieder herzustellenden Vertiefungen eindringen und diese bei der Relativverdrehung zwischen Schneidelement und Schweißelektrode kreisringförmig ausformen. Überraschend hat sich herausgestellt, dass gerade im Mittenbereich der im Wesentlichen ebenen Andruckfläche der Schweißelektrode eine derartige Profilierung von Nachteil ist. Durch die im Stand der Technik auch in diesem Mittenbereich durchgehenden Vertiefungen wird das Schweißverhalten der Schweißelektroden mit den zu verschweißenden Aluminiummaterialien verschlechtert, da anscheinend die schmalen Vorsprünge zwischen den Vertiefungen sich in diesem Mittenbereich beim Schweißvorgang besonders stark abnutzen oder verformen und zu Verkrustungen führen. Hierdurch wird die Standzeit der Schweißelektroden offensichtlich signifikant reduziert, so dass ein Schweißen von Aluminium mit derartigen Schweißelektroden unwirtschaftlich ist bzw. ein zu häufiges Nachbearbeiten erfordert. Mit Hilfe der erfindungsgemäß durch die im Mittenbereich der im Wesentlichen ebenen Andruckfläche der Schweißelektrode angeordneten eben und glatt gestalteten, vertieft angeordneten Fläche der Schweißelektrode kann dieses Problem gelöst und damit die Wirtschaftlichkeit der Verwendung der Schweißelektroden deutlich erhöht werden. Zur Erzeugung dieses eben und glatt gestalteten Mittenbereichs der Schweißelektrode weist das Scheidelement In diesem Mittenbereich einen geraden Konturabschnitt der Hauptschneide auf, der zwar ein Nachbearbeiten des eben und glatt gestalteten Mittenbereichs der Schweißelektrode erlaubt, in diesen Mittenbereich aber keine Profilierung in Form der außen darum herum verlaufenden Vertiefungen einbringt. Auch können dabei durch die Formgebung des Schneidelementes sonst auftretende Bearbeitungsprobleme in diesem Mittenbereich vermieden werden, die aus der dort herrschenden geringen Relativgeschwindigkeit bei der Relativdrehung zwischen Schneidelement und Schweißelektrode auftreten.

In weiterer Ausgestaltung weist die in der Schweißelektrode ausgebildete, im Wesentlichen ebene und vertieft liegende Kontaktfläche im Mittenbereich eine Ausdehnung von mehreren Breiten der kreisringförmig ausgerichteten Vertiefungen auf. Durch einen entsprechend großflächigen ebenen und glatten Mittenbereich können die Anpresskräfte beim Schweißen ausschließlich auf die Spitzen der umlaufenden Vertiefungen übertragen werden, so dass die Flächenpressung vereinheitlicht und damit die Abnutzung der Schweißelektrode reduziert wird. Je nach benutzten Anpresskräften beim Schweißen kann die Größe des ebenen und glatten Mittenbereichs entsprechend angepasst werden.

Von Vorteil ist es weiterhin, wenn die kreisringförmig ausgerichtete Profilierung der Hauptschneide des Schneidelementes parallel zum Rotationsmittelpunkt der relativen Rotation zwischen Schweißelektrode und Schneidelement bei der Formgebung ausgerichtet ist. Hierdurch bilden sich kreisringförmig um den Rotationsmittelpunkt der relativen Rotation zwischen Schweißelektrode und Schneidelement herum verlaufende Vertiefungen in der im Wesentlichen ebenen Fläche der Schweißelektrode, die ein gutes Tragbild bei der Verteilung der Anpresskräfte und ein sauberes Schweißverhalten der Schweißelektroden ergeben.

Weiterhin ist es von Vorteil, wenn die radialen Flächen der Profilierung einen Freiwinkel bezogen auf die Rotationslinien der mit der Profilierung in der Schweißelektrode herstellbaren Vertiefungen bilden. Damit die Profilierungen der Hauptschneide auch saubere Vertiefungen innerhalb der im Wesentlichen ebenen Fläche der Schweißelektrode bei der Relativdrehung zwischen Schweißelektrode und Schneidelement ergeben können, müssen die kreisringförmig angeordneten Profilierungen in dem Schneidelement in Umfangsrichtung einen Freiwinkel aufweisen. Hierdurch schneiden die Profilierungen des Schneidelementes nur direkt im Bereich der Hauptschneide, wohingegen die Profilierungen in Drehrichtung hinter der Hauptschneide einen zu Anfang kleinen und im weiteren Verlauf der Relativverdrehung immer größeren Abstand von den hergestellten Vertiefungen in der Schweißelektrode bekommen. Bildlich gesprochen haben die Profilierungen des Schneidelementes in der Draufsicht auf die im Wesentlichen ebene Fläche der Schweißelektrode eine etwa kommaförmige Berandung, wobei der breiteste Bereich der kommaförmigen Berandung im Bereich der Hauptschneide angeordnet ist und die kommaförmige Berandung immer schmaler wird, je weiter man sich von der Hauptschneide in Drehrichtung der Relativdrehung weg bewegt.

In einer ersten vorteilhaften Ausgestaltung sind als Profilform der Profilierung V-förmige, von dem Schneidelement spitz weg weisende Vorsprünge an der Hauptschneide im Bereich der Kante zwischen Spanfläche und Freifläche vorgesehen. Eine derartige etwa an ein Spitzgewinde erinnernde Profilierung ruft eine bildlich gesprochen zickzackförmige Anordnung ebenfalls spitz ausgebildeter Vertiefungen in der im Wesentlichen ebenen Fläche der Schweißelektrode hervor, die durch stabile V-förmige Spitzen voneinander getrennt sind.

In einer anderen Ausgestaltung ist es auch denkbar, dass als Profilform der Profilierung U-förmig abgerundete Vorsprünge an der Hauptschneide im Bereich der Kante zwischen Spanfläche und Freifläche vorgesehen sind. Die U-förmig in der Vertiefung abgerundeten Vorsprünge sind dabei voneinander beabstandet in radialer Richtung angeordnet, so dass zwischen den U-förmig abgerundeten Vorsprüngen breitere ebene Abschnitte der im Wesentlichen ebenen Fläche der Schweißelektrode stehen bleiben können, die ein verbessertes Trag- und Schweißverhalten bei der Anpressung der Schweißelektrode an die zu verschweißenden Aluminiummaterialien ergeben.

Eine weitere denkbare Ausgestaltung der Profilierung sieht, vor, dass als Profilform der Profilierung trapezförmig ausgebildete Vorsprünge an der Hauptschneide im Bereich der Kante zwischen Spanfläche und Freifläche vorgesehen sind. Trapezförmig ausgebildete Vorsprünge kombinieren die Vorteile V-förmig und U-förmig ausgebildeter Vertiefungen miteinander und sind daher ein guter Kompromiss hinsichtlich Trag- und Schweißverhalten und Lebensdauer der Vertiefungen.

Weiterhin ist es von Vorteil, wenn das Schneidelement zwei gegenüberliegende Hauptschneiden aufweist, so dass das Schneidelement auf Umschlag einsetzbar ist. Ein etwa balkenförmig ausgebildetes Schneidelement kann dabei an einer Oberseite und an einer Unterseite zwei identisch zueinander ausgebildete Hauptschneiden aufweisen, so dass das balkenförmig ausgebildete Schneidelement auf Umschlag innerhalb einer Halterung eingesetzt werden kann und damit die Zeit bis zur Nachbearbeitung des Schneidelementes verdoppelt werden kann.

Weiterhin ist es von Vorteil, wenn das Schneidelement in handelsübliche Aufnahmen von Vorrichtungen zur Formgebung und/oder zum mechanischen Entfernen von Ablagerungen an Werkstücken für das Punktschweißen von Stahlwerkstoffen eingesetzt werden kann. Hierdurch werden die für das Nachbearbeiten von Schweißelektroden für das Punktschweißen von Stahlwerkstoffen entwickelte Technologie und die dafür vorgesehenen Einrichtungen auch für das Schweißen von Aluminiumwerkstoffen einsetzbar, einfach indem die Schneidelemente entsprechend ausgetauscht werden. Dies verringert die gerätetechnischen Investitionen der Anwender.

Weiterhin ist es von Vorteil, wenn in mindestens einer der Seitenflächen des Schneidelementes eine bogenförmige Ausnehmung vorgesehen ist, die von außen bis in den Mittenbereich des Schneidelementes reicht. Hierdurch wird die Hauptschneide entsprechend gebogen ausgebildet und bietet dadurch optimierte Schneidverhältnisse, wie dies bei der Gestaltung von Schneidelementen für das Nachbearbeiten von Schweißelektroden für das Schweißen von Stahlwerkstoffen grundsätzlich schon bekannt ist.

Besonders vorteilhaft lässt sich die Vorrichtung betreiben, wenn die Relativdrehzahl zwischen Schneidelement und Schweißelektrode größer ist als die übliche Drehzahl bei der Bearbeitung nicht-profilierter Schweißelektroden, die in Abhängigkeit von dem jeweiligen Material der Schweißelektroden bei etwa 200 - 300 Umdrehungen/Minute bearbeitet werden. Hier werden die Schweißelektroden bei einer Drehzahl größer als 500 Umdrehungen/Minute, vorzugsweise zwischen 750 und 1000 Umdrehungen/Minute bearbeitet.

In einer ersten Ausgestaltung ist es denkbar, dass das Schneidelement balkenförmig längserstreckt derart ausgebildet ist, dass das Schneidelement bei der Bearbeitung die Vertiefungen der Schweißelektrode übergreift. Derartige Schneidelemente sind aus der Bearbeitung von Schweißelektroden für das Punktschweißen von Stahlmaterialien grundsätzlich bekannt, so z.B. aus der EP 0 804 986 B1. In einer anderen Ausgestaltung ist es aber auch denkbar, dass das Schneidelement einseitig auskragend derart ausgebildet ist, dass das Schneidelement bei der Bearbeitung In den Bereich der Vertiefungen der Schweißelektrode hinein ragt. Derartige Schneidelemente In sog. Einschneidentechnik sind ebenfalls aus der Bearbeitung von Schweißelektroden für das Punktschweißen von Stahlmaterialien grundsätzlich bekannt und können in erfindungsgemäßer Weise mit den beschriebenen Profilierungen zur Herstellung oder Nachbearbeitung der Vertiefungen versehen werden.

Die Erfindung betrifft weiterhin eine Schweißelektrode zum Aluminiumschweißen, die mit einer im Wesentlichen ebenen Kontaktfläche zur Anpressung an die zu verschweißenden Aluminiumwerkstoffe ausgebildet ist, die in der im Wesentlichen ebenen Kontaktfläche außenseitig kreisförmig angeordnete Vertiefungen aufweist. Eine derartige Schweißelektrode wird dadurch erfindungsgemäß weiter entwickelt, dass im Mittenbereich Innerhalb der kreisförmig angeordneten Vertiefungen eine im Wesentlichen ebene glatte Fläche angeordnet ist. Insbesondere, wenn in weiterer Ausgestaltung die im Wesentlichen ebene Kontaktfläche der Schweißelektrode im Mittenbereich Innerhalb der kreisförmig angeordneten Vertiefungen In axialer Richtung vertieft gegenüber den Spitzen der kreisringförmig angeordneten Vertiefungen ausgebildet ist, ergibt sich ein günstiges Tragverhalten der kreisförmig angeordneten Vertiefungen sowie eine Verbesserung des Schweißverhaltens, durch die die Vertiefungen begrenzenden Abschnitte der Profilierung der Schweißelektrode.

Eine besonders bevorzugte Ausführungsform der erfindungsgemäßen Vorrichtung zeigt die Zeichnung.

Es zeigen:
- Figur 1: - eine perspektivische Ansicht einer Anwendung der erfindungsgemäßen Schweißelektroden in Form von zwei ebenen Blechen zum Schweißen von zwei Aluminiummaterialien,
- Figur 2: - Räumliche Ansicht, Draufsicht, Seitenansicht und Schnitt durch eine erste Ausgestaltung eines erfindungsgemäßen Schneidelements zur Herstellung von Schweißelektroden gemäß Fig. 1 mit einer V-förmigen Ausgestaltung der Vertiefungen,
- Figur 3: - Räumliche Ansicht, Draufsicht, Seitenansicht und Schnitt durch eine weitere Ausgestaltung eines erfindungsgemäßen Schneidelements zur Herstellung von Schweißelektroden gemäß Fig. 1 mit einer trapezförmigen Ausgestaltung der Vertiefungen,
- Figur 4: - Räumliche Ansicht, Draufsicht, Seitenansicht und Schnitt durch eine erste Ausgestaltung eines erfindungsgemäßen Schneidelements zur Herstellung von Schweißelektroden gemäß Fig. 1 mit einer U-förmigen Ausgestaltung der Vertiefungen,
- Figur 5: - Räumliche Ansicht einer weiteren Ausgestaltung eines erfindungsgemäßen Schneidelements zur Herstellung von Schweißelektroden gemäß Fig. 1 mit an einem herauskragenden Abschnitt angeordneten Profilierungen in Halbkreisform oder einem Ausschnitt hiervon.

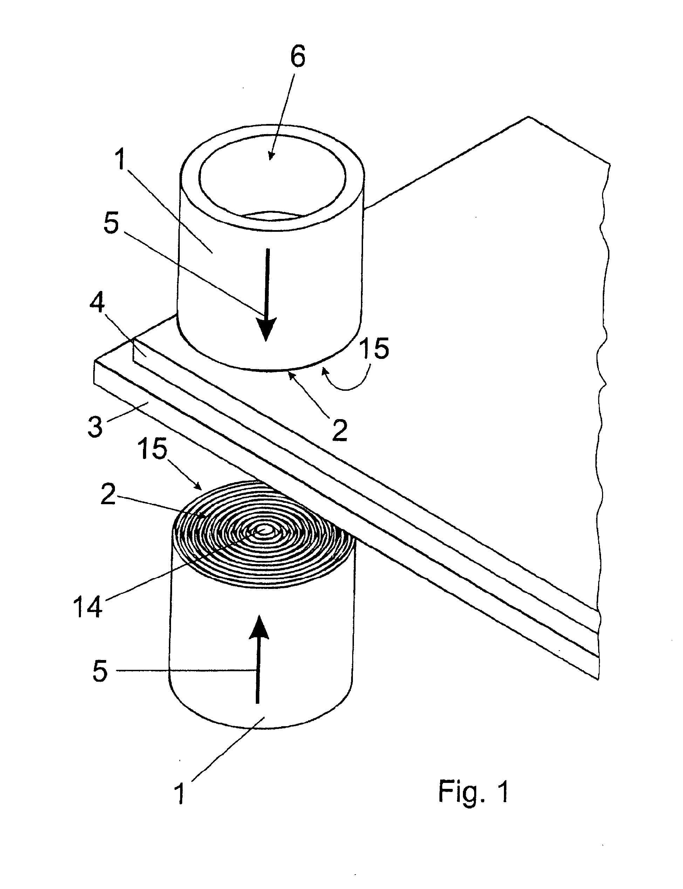

In der Figur 1 ist in einer schematischen Darstellung die Situation beim Punktschweißen von Aluminiummaterialien 3, 4 in Form von zwei ebenen Blechen zu erkennen, die durch als austauschbare Kappen ausgestaltete und nur abstrahiert dargestellte Schweißelektroden 1 miteinander punktuell verschweißt werden sollen. Die beiden Aluminiummateriallen 3, 4 liegen flach aufeinander und werden über eine nicht dargestellte Schweißzange im Bereich der Schweißelektroden 1 durch die Schweißelektroden 1 unter Druck in Richtung der Pfeile 5 aufeinander gedrückt. Hierbei liegen die Schweißelektroden 1 beim Verschweißen im Wesentlichen flächig auf den Aluminiummateriallen 3, 4 auf und übertragen damit den über die Schweißelektroden 1 zugeführten Schweißstrom in die Punktschweißstelle zwischen den Aluminiummaterialien 3, 4.

Zur Erzielung wirtschaftlich und technologisch vorteilhafter Standzeiten der Schweißelektroden 1 ist besonders darauf zu achten, dass sich bei dem Kontakt zwischen Schweißelektroden 1 und Aluminiummaterialien 3, 4 immer gleiche Kontaktierungsbedingungen ergeben. Dies ist insofern nicht ganz unproblematisch, da sich die Schweißelektroden 1 im Bereich des mechanischen Kontaktes mit den Aluminiummaterialien 3, 4 beim Schweißen verändern. Hierbei treten sowohl mechanische Veränderungen der Berührungszone auf als auch verbleiben Schlacken an den Schweißelektroden 1, die bei der Verschweißung entstehen. Zudem können metallurgische Änderungen der Schweißelektroden 1 auftreten, die allesamt dazu führen können, dass die nachfolgenden Verschweißungen nicht mehr in der notwendigen Qualität ausgeführt werden können.

Daher ist es grundsätzlich aus dem Stand der Technik bekannt, die Schweißelektroden 1 im Bereich der Kontaktierung mit den Aluminiummaterialien 3, 4 profiliert auszubilden, z.B. mit kreisringförmigen Vertiefungen 2 auszustatten, durch welche die Berührung zwischen der Schweißelektrode 1 und den Aluminiummaterialien 3, 4 nicht mehr ganzflächig, sondern ringförmig bzw. streifenförmig ausgestaltet wird. Nachteilig an einer solchen Ausgestaltung ist aber, dass der Schweißvorgang zwischen der Schweißelektrode 1 und den Aluminiummaterialien 3, 4 im Mittenbereich der Schweißelektrode 1 verschlechtert wird, wodurch sich die Vertiefungen 2 bzw. deren begrenzende Wandungen unzulässig verändern und damit die Kontaktfläche ebenfalls unzulässig verändert wird.

Die vorliegende Erfindung schlägt deshalb vor, eine Schweißelektrode 1 dieser bekannten Gestaltung derart weiter zu entwickeln, dass einerseits die unzulässige Veränderung der Vertiefungen 2 verhindert und andererseits die Vorteile der Vertiefungen 2 auf den Schweißvorgang erhalten bleiben. Hierzu wird zum einen z.B. im Mittenbereich der Kontaktfläche zwischen Schweißelektrode 1 und Aluminiummaterialien 3, 4 ein im Wesentlichen ebener, vertieft gegenüber den Aluminiummaterialien 3, 4 liegender Flächenbereich 10 vorgesehen, der ausreichend groß ist, um sicher eine Berührung dieses Mittenbereichs 10 mit den Aluminiummaterialien 3, 4 zu verhindern. Zum anderen kann in noch nachstehend beschriebener Weise die Profilierung 9 und damit die Ausgestaltung der Vertiefungen 2 selbst variiert werden, um eine sichere Übertragung der Anpresskräfte auch im Bereich der Vertiefungen 2 zu gewährleisten. Hierdurch lässt sich einerseits die Standzeit der als in den Vertiefungen 2 auf eine nicht dargestellte Schweißzange aufsteckbaren, kappenartigen Schweißelektroden 1 deutlich erhöhen und gleichzeitig das vorteilhafte Schweißverhalten der mit den Vertiefungen 2 ausgestalteten Fläche erhalten.

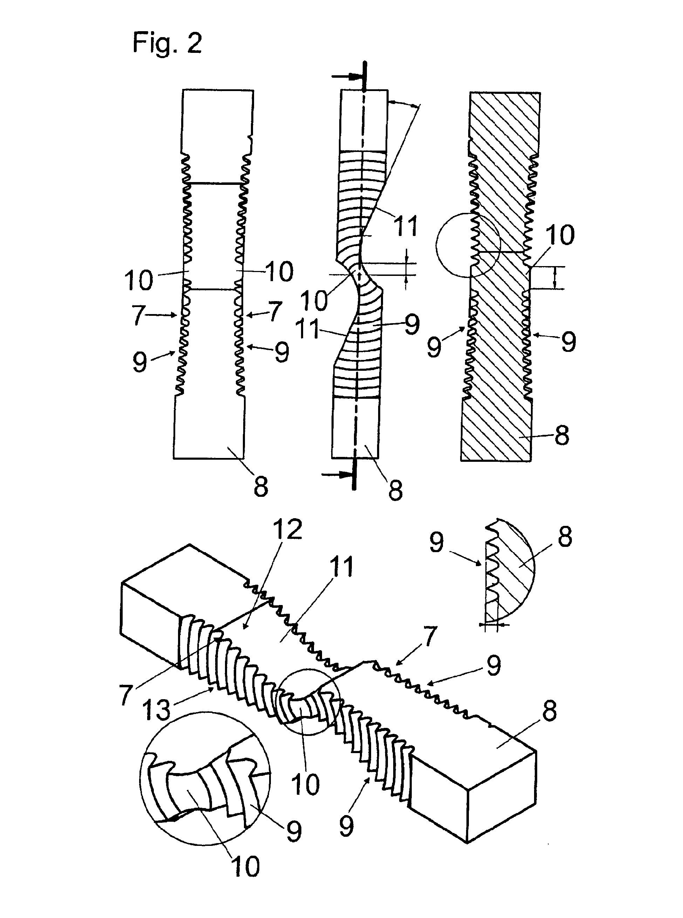

Auch wenn die Standzeit derartig modifizierter Schweißelektroden 1 hierdurch wesentlich erhöht werden kann, ist vor dem ersten Einsatz und zyklisch die Schweißelektrode 1 immer wieder nachzuformen und von den vorstehend beschriebenen nachteiligen Veränderungen zu befreien. Ein hierfür geeignetes Schneidelement 8 ist in verschiedenen Ansichten in der Figur 2 dargestellt.

Bei der Entwicklung eines entsprechenden für das Aluminiumschweißen geeigneten Schneidelementes 8 wurde von einem grundsätzlich aus der EP 0 804 986 B1 bekannten Schneidelement ausgegangen, wie dieses seit langem für das Bearbeiten von Schweißelektroden 1 für das Verschweißen von Stahlmaterialien bekannt ist. Hierzu wird ein balkenförmiges, mit einer bogenförmigen Ausnehmung 11 versehenes Schneidelement 8 genutzt, das die ganze beim Schweißen beteiligte Fläche der Schweißelektrode 1 gleichzeitig bearbeitet und dabei derart geformt ist, dass sich überall entlang der bearbeiteten Fläche der Schweißelektrode 1 gleiche Zerspanungsverhältnisse bilden. Hinsichtlich der grundsätzlichen geometrischen Verhältnisse an einem derartigen balkenförmigen Schneidelement 8 sei auf die EP 0 804 986 B1 verwiesen.

Ein derartiges Schneidelement 8 wird nun für die Bearbeitung der im Wesentlichen ebenen Berührungsfläche der Schweißelektroden 1 zum Schweißen von Aluminiummateriallen 3, 4 derart weiter entwickelt, dass im Bereich der Berührung mit der Schweißelektrode 1 die Hauptschneide 7 des Schneidelementes 8 profiliert ausgebildet wird. Die Hauptschneide 7 bildet sich hierbei aus der Kante der Berührung von Spanfläche 12 und Freifläche 13, wobei die Profilierungen 9 so ausgebildet sind, dass sich die gewünschten Vertiefungen 2 in der Schweißelektrode 1 bilden. Da Schweißelektrode 1 und Schneidelement 8 zur Bearbeitung der Schweißelektrode 1, wie grundsätzlich bekannt, am einfachsten eine Relativdrehung zueinander ausführen, sind die Profilierungen 9 der Hauptschneide 7 des Schneidelementes 8 symmetrisch zu dem relativen Drehpunkt von Schweißelektrode 1 und Schneidelement 8 zueinander angeordnet. Die Profilierung ist hierbei In der Figur 2 V-förmig spitz ausgestaltet, so dass sich eine Art Zickzack-Linie der Hauptschneide 7 bildet. Hinter den schneidenden Spitzen der Profilierung 7 ist auch die Freifläche 13 des Schneidelementes 8 entsprechend kreisringförmig profiliert ausgebildet, so dass sich die schneidenden Kanten der Hauptschneide 7 entsprechend abstützen können. Die Profilierungen In der Freifläche 13 weisen hierbei einen Hinterschliff um einen geringen Freiwinkel auf, so dass die Profilierungen 9 nur im Bereich der Hauptschneide 7 tatsächlich an den erzeugten Vertiefungen 2 schneidend anliegen und ansonsten einen geringen Abstand zu diesen Vertiefungen 2 aufweisen. Dadurch sind die Profilierungen 9 in der Freifläche 13 etwa kommaförmig hinsichtlich ihrer Umrissform ausgebildet.

Zwischen den beidseits des Drehzentrums der Relativdrehung angeordneten Profilierungen 9 ist eine mittig liegende Kante 10 der Hauptschneide 7 angeordnet, die zur Bildung einer flächigen Vertiefung 14 in Mitte der Schweißelektrode 1 dient. Durch diese Vertiefung wird verhindert, dass in diesem Bereich eine kontaktierende Berührung zwischen Schweißelektrode 1 und zu verschweißenden Aluminiummaterialien 3, 4 erfolgt, wodurch die Standzeit der Schweißelektrode 1 deutlich erhöht werden kann.

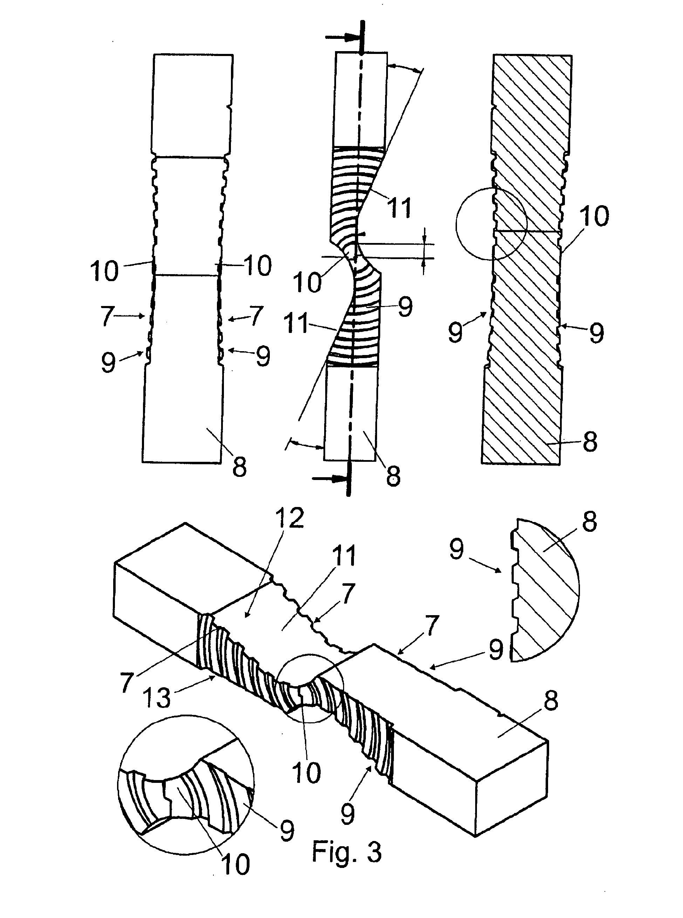

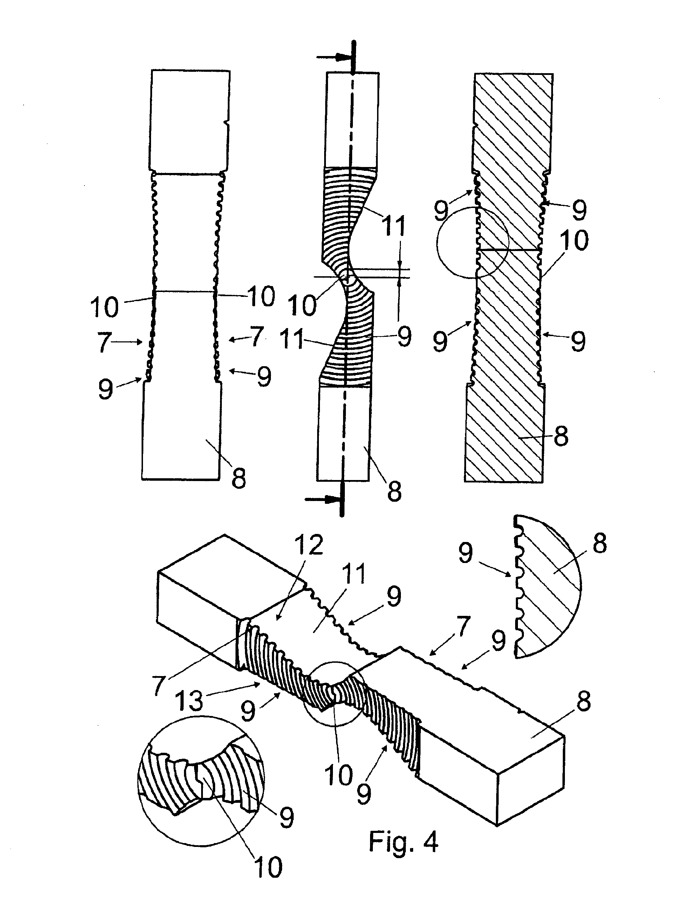

In der Figur 2 ist die Profilierung 9 V-förmig spitz ausgestaltet, wie dies in dem vergrößerten Ausschnitt zu erkennen ist. Es ist jedoch ebenso denkbar, andere Profilformen der Profilierung 9 zu verwenden. Hier ist in der ansonsten weitgehend identischen Gestaltung nach Figur 3 eine trapezförmige Ausgestaltung der Profilierung 9 denkbar oder wie in der Figur 4 zu erkennen eine halbrunde Profilierung 9. Da die Ausgestaltungen gemäß den Figuren 3 und 4 ansonsten derjenigen der Figur 2 entsprechen, sei zur weiteren Erläuterungen der Figuren 3 und 4 auf die Figur 2 verwiesen.

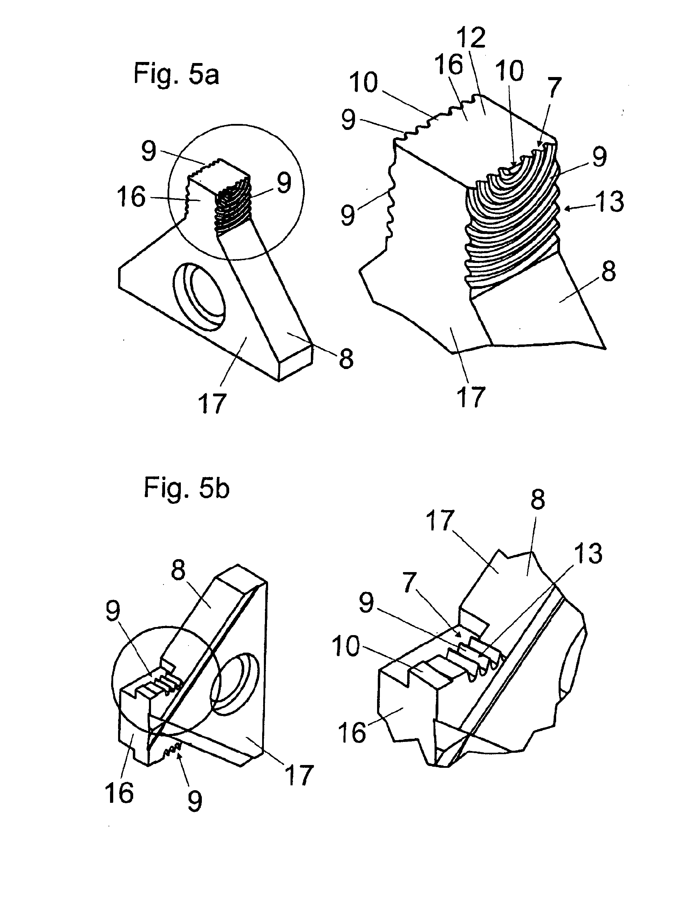

In der Figur 5a ist eine andere Ausgestaltung eines Schneidelements 8 mit einseltig auskragendem Profilierungsabschnitt 16 in einer Gesamtansicht und einem vergrößerten Detail zu erkennen, wodurch das Schneidelement 8 bei der Bearbeitung in den Bereich der Vertiefungen 2 der Schweißelektrode 1 hineinragt. Derartige Schneidelemente 8 in sog. Einschneidentechnik sind grundsätzlich durch die Bearbeitung von Schweißelektroden 1 für das Punktschweißen von Stahlmaterialien bekannt. Ein derartiges Schneidelement 8 wird dadurch modifiziert, dass im Bereich der Hauptschneide 7 auf dem auskragenden, im Wesentlichen ebenen Abschnitt 17 eine halbkreisringförmig ausgestaltete Profilierung 9 beispielsweise durch Formschleifen eingebracht wird. Diese Profilierung 9 weist wiederum einen Freischliff in Drehrichtung der Relativbewegung zwischen Schneidelement 8 und Schweißelektrode 1 auf und führt dabei zu einem sauberen Ausarbeiten der Profilierungen 2. Der auskragende, im Wesentlichen ebene Abschnitt 16, der an einer Klemmbasis 17 angeordnet ist, erstreckt sich bei der Bearbeitung so weit über die Schweißelektrode 1, dass er etwas über die Hälfte der Profilierungen 2 abdeckt. Selbstverständlich können sich die Profilierungen 9 auch nur über Teilabschnitte der Halbkreisform erstrecken, wie z.B. in der Figur 5b zu erkennen.

### Sachnummernliste:

- 1: - Schweißelektrode
- 2: - Vertiefungen
- 3: - Aluminiummaterial
- 4: - Aluminiummaterial
- 5: - Andrückrichtung Schweißelektrode
- 6: - Napf der kappenartigen Schweißelektrode
- 7: - Hauptschnelde
- 8: - Schneidelement
- 9: - Profilierung
- 10: - Mittenbereich Hauptschneide
- 11: - bogenförmige Ausnehmung
- 12: - Spanfläche
- 13: - Freifläche
- 14: - vertieft liegender Mittenbereich Schweißelektrode
- 15: - Kontaktfläche
- 16: - auskragender Profilierungsabschnitt
- 17: - Klemmbasis

## Patentansprüche

1. Vorrichtung zur Formgebung und/oder zum mechanischen Entfernen von Ablagerungen an Schweißelektroden (1) beim Aluminiumschweißen, aufweisend mindestens ein Schneidelement (8) mit einer Hauptschneide (7), wobei der Hauptschneide (7) mindestens eine Spanfläche (12) und mindestens eine Freifläche (13) zugeordnet sind und die Hauptschneide (7) des Schneidelements (1) jeweils im Bereich der Kante von aneinander angrenzender Spanfläche (12) und Freifläche (13) gebildet ist, und Schneidelement (8) und Schweißelektrode (1) eine Relativdrehung zueinander ausführen, **dadurch gekennzeichnet, dass**
die Hauptschneide (7) im Bereich der Kante zwischen Spanfläche (12) und Freifläche (13) beidseits eines Mittenbereichs (10) eine kreisringförmig um den Mittenbereich (10) ausgerichtete Profilierung (9) aufweist, die zur rotatorischen spanenden Bearbeitung von kreisringförmigen Vertiefungen (2) in der im Wesentlichen ebenen Kontaktfläche (15) der Schweißelektrode (1) dienen, wohingegen vorzugsweise im Mittenbereich (10) des Schneidelementes (1) ein gerader Konturabschnitt (10) der Hauptschneide (7) gebildet ist, der In der Schweißelektrode (1) eine im Wesentlichen ebene, vertieft liegende Fläche (14) ausbildet.

2. Vorrichtung gemäß Anspruch 1, **dadurch gekennzeichnet, dass** die in der Schweißelektrode (1) ausgebildete im Wesentlichen ebene Fläche (14) vorzugsweise im Mittenbereich eine Ausdehnung von mehreren Breiten der kreisringförmig ausgerichteten Vertiefungen (2) aufweist.

3. Vorrichtung gemäß Anspruch 1, **dadurch gekennzeichnet, dass** die kreisringförmig ausgerichtete Profilierung (9) der Hauptschneide (7) des Schneidelementes (8) parallel zum Rotationsmittelpunkt der relativen Rotation zwischen Schweißelektrode (1) und Schneidelement (8) bei der Formgebung ausgerichtet ist.

4. Vorrichtung gemäß Anspruch 1, **dadurch gekennzeichnet, dass** die radialen Flächen der Profilierung (9) einen Freiwinkel bezogen auf die Rotationslinien der mit der Profillerung (9) In der Schweißelektrode (1) herstellbaren Vertiefungen (2) bilden.

5. Vorrichtung gemäß Anspruch 1, **dadurch gekennzeichnet, dass** als Profilform der Profilierung (9) V-förmige, von dem Schneidelement (8) spitz weg weisende Vorsprünge an der Hauptschneide (7) im Bereich der Kante zwischen Spanfläche (12) und Freifläche (13) vorgesehen sind.

6. Vorrichtung gemäß Anspruch 1, **dadurch gekennzeichnet, dass** als Profilform der Profilierung (9) U-förmig abgerundete Vorsprünge an der Hauptschneide (7) im Bereich der Kante zwischen Spanfläche (12) und Freifläche (13) vorgesehen sind.

7. Vorrichtung gemäß Anspruch 1, **dadurch gekennzeichnet, dass** als Profilform der Profilierung (9) trapezförmig ausgebildete Vorsprünge an der Hauptschneide (7) im Bereich der Kante zwischen Spanfläche (12) und Freifläche (13) vorgesehen sind.

8. Vorrichtung gemäß Anspruch 1, **dadurch gekennzeichnet, dass** das Schneidelement (8) zwei gegenüberliegende Hauptschneiden (7) aufweist, so dass das Schneidelement (8) auf Umschlag einsetzbar ist.

9. Vorrichtung gemäß Anspruch 1, **dadurch gekennzeichnet, dass** das Schneidelement (8) In handelsübliche Aufnahmen von Vorrichtungen zur Formgebung und/oder zum mechanischen Entfernen von Ablagerungen an Werkstücken für das Punktschweißen von Stahlwerkstoffen einsetzbar ist.

10. Vorrichtung gemäß Anspruch 1, **dadurch gekennzeichnet, dass** in mindestens einer der Seitenflächen des Schneidelementes (8) eine bogenförmige Ausnehmung (11) vorgesehen ist, die von außen bis in den Mittenbereich (10) des Schneidelementes (8) reicht.

11. Vorrichtung gemäß Anspruch 1, **dadurch gekennzeichnet, dass** die Relativdrehzahl zwischen Schneidelement (8) und Schweißelektrode (1) größer ist als die übliche Drehzahl bei der Bearbeitung nicht-profilierter Schweißelektroden (1), vorzugsweise größer ist als 500 Umdrehungen/Minute, besonders vorzugsweise zwischen 750 und 1000 Umdrehungen/Minute liegt.

12. Vorrichtung gemäß einem der vorstehenden Ansprüche, **dadurch gekennzeichnet, dass** das Schneidelement (8) balkenförmig längserstreckt derart ausgebildet ist, dass das Schneidelement (8) bei der Bearbeitung die Vertiefungen (2) der Schweißelektrode (1) übergreift.

13. Vorrichtung gemäß einem der Ansprüche 1 bis 11, **dadurch gekennzeichnet, dass** das Schneidelement (8) einseitig auskragend (16) derart ausgebildet ist, dass das Schneidelement (8) bei der Bearbeitung in den Bereich der Vertiefungen (2) der Schweißelektrode (1) hinein ragt.

14. Schweißelektrode (1) zum Aluminiumschweißen, mit einer im Wesentlichen ebenen Kontaktfläche zur Anpressung an die zu verschweißenden Aluminiumwerkstoffe (3, 4) ausgebildet ist, die in der im Wesentlichen ebenen Kontaktfläche (15) außenseitig kreisförmig angeordnete Vertiefungen (2) aufweist,
**dadurch gekennzeichnet, dass**
im Mittenbereich innerhalb der kreisförmig angeordneten Vertiefungen (2) eine im Wesentlichen ebene glatte Fläche (14) angeordnet ist.

15. Schweißelektrode gemäß Anspruch 14, **dadurch gekennzeichnet, dass** die im Wesentlichen ebene Kontaktfläche (15) der Schweißelektrode (1) im Mittenbereich innerhalb der kreisförmig angeordneten Vertiefungen (2) in axialer Richtung tiefer als die Spitzen der kreisringförmig angeordneten Vertiefungen (2) ausgebildet ist.
